# EUROPEAN PATENT SPECIFICATION

(11) **EP 2 674 198 B1**
(45) Date of publication and mention of the grant of the patent: **04.04.2018**
(21) Application number: 12744457.8
(22) Date of filing: 09.02.2012
(51) Int. Cl.: A62D 1/00, C08J 9/34

(54) **AUTONOMOUS FIRE-FIGHTING AGENT**
AUTONOMES BRANDBEKÄMPFUNGSMITTEL
AGENT AUTONOME DE LUTTE CONTRE LE FEU

(30) Priority: 10.02.2011 RU 2011104729
(43) Date of publication of application: 18.12.2013
(73) Proprietor: Independent Fire Suppression Technologies; Inc., Katy, Texas 77449 (US)
(72) Inventor: BLIZNETS, Igor, Moscow 107589 (RU); SEREGIN, Victor, Moskovskaya obl. 141300 (RU)
(74) Representative: Gulde & Partner
(86) International application number: PCT/IB2012/000221
(87) International publication number: WO 2012/107825

(56) References cited:
- WO-A1-99/56830
- JP-A- 2007 160 028
- JP-A- 2009 119 240
- RU-C1- 2 403 934
- RU-U1- 90 994
- DATABASE WPI Week 201110 Thomson Scientific, London, GB; AN 2011-B04707 XP002741397, & RU 90 994 U1 (PIROKHIMIKA CC) 27 January 2010 (2010-01-27)

## Description

This patent application relates to firefighting agents, in particular, to autonomous firefighting agents and may be used to put out fire at the early stages thereof.

More specifically, in one embodiment of the invention, it relates to an autonomous firefighting agent.

A prior art firefighting agent is made from a material having fire-extinguishing properties and consists of microcapsules of fire-extinguishing composition embedded in a polymeric binder. The microcapsules are microspheres consisting of spherical gelatin shells, each enclosing a liquid firefighting agent such as any substances in the class of halo-organic compounds of the formula C₃F₇I, or CₙF₂ₙ₊₂, or (C₂F₅)₂N(CₘF₂ₘ₊₁), wherein n=5-7 and m=1-2, that are released automatically upon heating. The microcapsules have a size of 100 to 400 µm (that is, from 10⁻⁴ m to 4·10⁻⁴ m) and open up within the temperature range of 130 to 149°C and 166 to 190°C (Patent RU2161520, 1998).

The prior art agent is deficient because making gelatin shells for microcapsules used therein to micro-capsulize a fire-extinguishing composition is a technologically complicated and expensive process that raises significantly the costs of products manufactured from this material. Besides, the prior art agent has a very high triggering threshold (at a temperature of 130°C) that is not always acceptable.

The closest related prior art invention of the claimed agent is an autonomous firefighting agent made from a material having fire-extinguishing properties that comprises microcapsules containing a fire-extinguishing composition, said microcapsules having a size ranging from 2 to 100 µm (that is, from 2·10⁻⁶ m to 10⁻⁴ m), said material being halocarbon enclosed in a polymeric shell of polyurea and/or polyurethane, and a binder such as a polymeric resin. The prior art agent has a mass content of halocarbon varying between 70% and 90%. The material having fire-extinguishing properties is applied to a solid-phase support, for example, a metal substrate (Patent RU90994, 2009).

The prior art agent has capsules opening within the temperature range of 110 to 165°C and is manufactured in an advanced process at lower costs.

The prior art agent, though, has a number of drawbacks. For example, the firefighting layer may crack and flake off the substrate surface over time and/or with fluctuations in the temperature and moisture content of the environment. As a result, the fire-extinguishing properties of the agent deteriorate and it may fail to function in response to ignition. Furthermore, for the substrate material, for example, metal, coated with the fire-extinguishing composition to adhere firmly to the walls of an object protected, the surface to which the agent is attached must meet certain requirements, such as be smooth and level, a requirement that is not always attainable in practice. It has also been demonstrated practically that a material having fire-extinguishing properties exhibits its best properties when the content of halocarbon therein is other than in the range of 70% to 90%.

It is an object of the present patent application to develop an autonomous firefighting agent made from a composite material having fire-extinguishing properties on the basis of a micro-capsulized fire-extinguishing composition that is durable, strong, and flexible to be suitable for practical employment without using a solid-phase substrate.

The technical effect of this invention is achieved in an autonomous firefighting agent made from a material having fire-extinguishing properties and containing microcapsules filled with a fire-extinguishing composition and having a size ranging from 2 to 100 µm (that is, 2·10⁻⁶ m to 10⁻⁴ m), said microcapsules being halocarbon enclosed in a polymeric shell of polyurea and/or polyurethane, and a binder, said binder being a composite material comprising a polymeric component and mineral fibers and/or particles, said halocarbon being enclosed in a polymeric shell of polyurea and/or polyurethane on the basis of a polyisocyanate prepolymer, and said halocarbon being 1,1,2,2-tetrafluorodibromoethane, and/or 1,1,2-trifluorotrichloroethane, and/or 2-iodo-1,1,1,2,3,3,3-heptafluoropropane, and/or a mixture thereof with other halocarbons.

The other halocarbons in the mixture preferably contain any one of the following second substances: (a) 1,1,2,2-tetrafluoroethane; (b) 1,1-difluoro-2,2,2-trichloroethane; (c) 1,2-difluorotrichloroethane; (d) 1,1-difluoro-1,2-dichloroethane; (e) 1,2-difluoro-1,1-dichloroethane; (f) 1,1-difluoro-1-chloroethane; (g) 1-fluoro-1,1-dichloroethane; (h) 1-fluoro-2-chloroethane; (i) pentafluorochloroethane; (j) 1,1,2,2-tetrafluorodichloroethane; (k) 1,1,1-trifluorotrichloroethane; (I) 1,1,2-trifluoro-trichloroethane; (m) 1,1-difluorotetrachloroethane; and (n) 1,2-difluorotetrachloroethane.

Preferably, the mineral fibers contain at least one of the following materials: (a) glass fiber; (b) basalt fiber; (c) fiber of natural minerals; and (d) fiber of artificial minerals.

Preferably, the mineral particles contain at least one of the following materials: (a) calcite; (b) marble; (c) chalk; (d) natural minerals; and (e) artificial minerals.

Preferably, the polymeric component contains at least one of the following substances: (a) acrylic resin; (b) alkyd resin; (c) glyptal resin; (d) latex resin; (e) pentaphthalic resin; (f) epoxy resin; (g) polyurethane; (h) polyurea; (i) polyvinyl alcohol; and (j) polyvinyl acetate.

The agent may preferably be manufactured in the form of a plate.

Microcapsules made from polyurea or polyurethane on the basis of a polyisocyanate prepolymer have a high strength to be filled with halocarbons and also have a thin shell exploding at a specified temperature in the range of 110 to 165°C. The shell remains tightly sealed for a long time for the fire-extinguishing agent to be stored for several years at an efficiency loss of 10% at most.

Polyisocyanate prepolymer used in this invention is essential for producing a "denser" cellular polyurea polymer having stronger chemical bonds and/or polyurethane because polyisocyanate reacts with several thousand hydroxyl or amino groups.

The binder, which is a composite polymeric material containing a polymeric component and mineral fibers and/or particles, contributes strength, flexibility, and durability to the agent.

The properties of the polymeric component are beneficial for manufacturing the agent in which microcapsules and other components of the composite material are distributed in the resin, whereupon the resulting fluid mass is shaped and solidifies into the claimed firefighting agent.

The mineral component helps capsules to be distributed evenly in the filler during the agent manufacturing process such that the filler does not crush the capsules upon drying. Mineral fibers prevent the resulting material from cracking, and mineral particles cause air pores to be formed in the material for all the capsules in the material to function upon ignition such that all gas enclosed in the capsules, rather than a portion thereof, is used to put out the fire.

The geometrical plate-like shape of the agent contributes to its maximum efficiency in use. Apart from plate shape, the agent may have any other shape suitable for protecting a particular object.

According to its second embodiment, the invention relates to a method for manufacturing an autonomous firefighting agent according to the claimed invention. The method comprises the manufacturing steps of:
- preparing a first mixture of a fire-extinguishing agent and polyisocyanate;
- obtaining an emulsion of the first mixture in an aqueous solution of polyvinyl alcohol;
- adding the resulting emulsion to an aqueous solution of polyethylene polyamine;
- producing a suspension of microcapsules in water;
- preparing a second mixture of the suspension and a binder;
- shaping plates from the second mixture;
- drying the plates;
- applying an adhesive layer to one side of a plate;
- covering the adhesive layer with a detachable protective film; and
- cutting pieces of a specified size out of the plates.

This manufacturing method helps obtain a highly effective firefighting agent that releases the fire-extinguishing agent intensively and is flexible, strong, durable, reliable, and lightweight in use.

According to its third embodiment, the invention relates to an object using the autonomous firefighting agent of this invention to put out fire within 10 to 20 seconds after ignition.

The invention helps effectively to protect objects such as, for example, electrical switchboards and boxes (in particular, electrical socket boxes), engine bays of vehicles, transformer stations, server stations, and other electrical switchgear and power units against destruction by fire.

Other distinctive features and advantages of the invention will be clear from the description following below for illustration, rather than restriction, purposes with reference to FIG. 1 to FIG. 4 attached hereto.

The patent application is illustrated by the drawings wherein:
FIG. 1 is a diagrammatic general side view of the autonomous firefighting agent;
FIG. 2 is a microphotograph of the structure of a composite fire-extinguishing material;
FIG. 3 and FIG. 4 are specific examples of the claimed agent placed on an object to be protected, in particular:

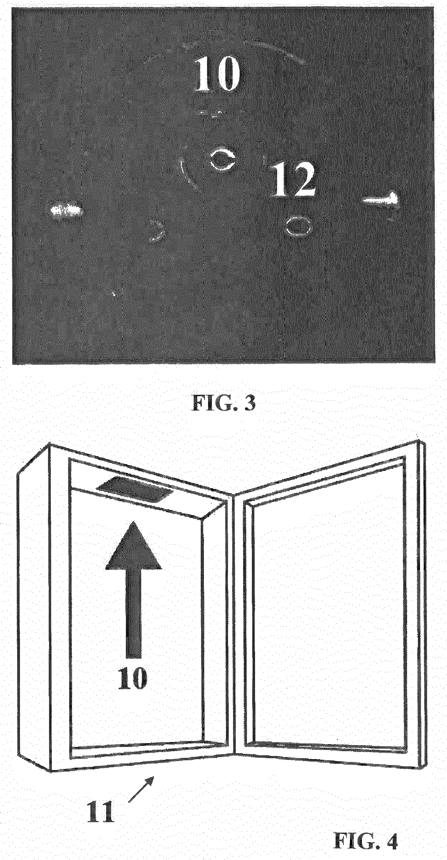

   FIG. 3 shows the agent placed in an electrical socket box; and
   FIG. 4 shows diagrammatically the application of the agent in an electrical switchboard.

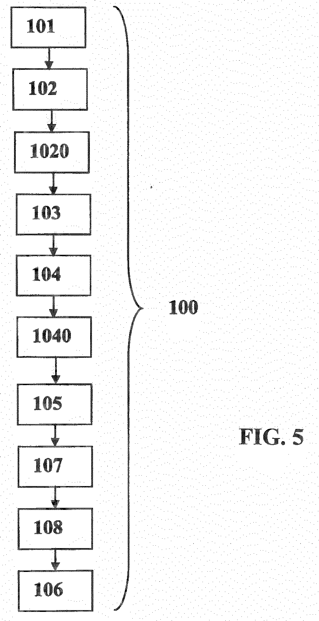

FIG. 5 shows diagrammatically an exemplary sequence of steps of the method for manufacturing an autonomous firefighting agent of the present invention.

In its first embodiment, the invention relates to an autonomous firefighting agent 10 cut out of a sheet 1 of a composite material having fire-extinguishing properties. The material comprises microcapsules 2 of a fire-extinguishing composition having a size of 2 to 100 µm (that is, from 2·10⁻⁶ m to 10⁻⁴ m) selected from halocarbons, such as 1,1,2,2-tetrafluorodibromoethane, and/or 1,1,2-trifluorotrichloroethane, and/or 2-iodo-1,1,1,2,3,3,3-heptafluoropropane, and/or a mixture thereof with other halocarbons, enclosed in a polymeric shell of polyurea, and/or polyurethane on the basis of a polyisocyanate prepolymer.

The aforesaid halocarbons may be used in a mixture with the following halocarbons: 1,1,2,2-tetrafluoroethane; 1,1-difluoro-2,2,2-trichloroethane; 1,2-difluorotrichloroethane; 1,1-difluoro-1,2-dicloroethane; 1,2-difluoro-1,1-dichloroethane; 1,1-difluoro-1-chloroethane; 1-fluoro-1,1-dichloroethane; 1-fluoro-2-chloroethane; pentafluorochloroethane; 1,1,2,2-tetrafluorodichloroethane; 1,1,1-trifluorotrichloroethane; 1,1,2-trifluorotrichloroethane; 1,1-difluorotetrachloroethane; 1,2-difluorotetrachloroethane; and so on.

Microcapsules 2 are distributed in a binder 3, which is a composite polymeric material comprising a polymeric component and a mineral component 4 in the form of fibers 5 and/or particles. Natural and artificial minerals may be used as mineral component 4 in the binder. Glass fiber, basalt fiber, and other fibers may be used as mineral fibers 5. Calcite, marble, chalk, and other particles may be used as mineral particles.

The polymeric component may be chosen from acrylic, and/or alkyd, and/or glyptal, and/or latex, and/or pentaphthalic, and/or epoxy resins, and/or polyurethane, and/or polyurea, and/or polyvinyl alcohol, and/or polyvinyl acetate.

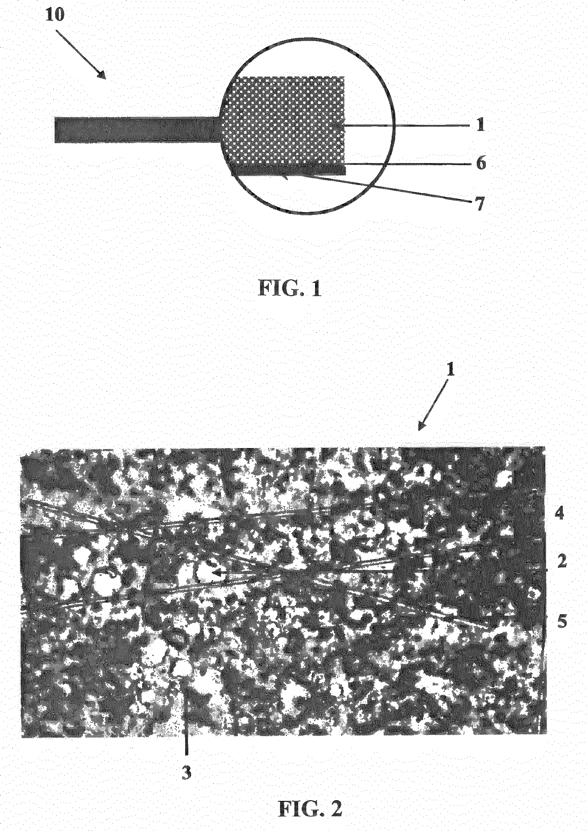

An adhesive layer 6 covered with a protective film 7 (FIG. 1) is applied to one side of the formed composite material 1 to attach the same to the surface of an object to be protected.

According to its second embodiment, the invention relates to a method for manufacturing (100) an autonomous firefighting agent 10.

Microcapsulized halocarbons are obtained by polymerization on the interface of the phases. For this purpose, a first mixture of a fire-extinguishing agent and polyisocyanate is prepared (101). The resulting first mixture is poured into an aqueous solution of polyvinyl alcohol to obtain (102) an emulsion. An aqueous solution of polyethylene polyamine is added (1020) to the emulsion to obtain (103) a suspension to form the shells of microcapsules 2. The suspension of microcapsules 2 and the fire-extinguishing agent is mixed with binder 3 to obtain (104) a second mixture.

The resulting second mixture mass is placed (1040) in a pan designed for this purpose to solidify and dry (105). The solidified and dried composite material 1 is cut up (106) into pieces of desired shape that are used as agent 10 having fire-extinguishing properties. For agent 10 to be affixed to the surface of objects to be protected, one side of the agent is coated (107) with an adhesive layer 6 that is covered (108) with an easily detachable protective film 7.

FIG. 5 shows diagrammatically an example of a possible sequence of aforesaid steps of the method for manufacturing (100) an autonomous firefighting agent according to the invention by:
- preparing (101) a first mixture of a fire-extinguishing agent and polyisocyanate;
- obtaining (102) an emulsion of the first mixture in an aqueous solution of polyvinyl alcohol;
- adding (1020) the resulting emulsion to an aqueous solution of polyethylene polyamine;
- obtaining (103) a suspension of microcapsules in water;
- preparing (104) a second mixture of the suspension and a binder;
- shaping (1040) the second mixture into plates of desired thickness;
- drying (105) the plates;
- applying (107) an adhesive layer 6 to one side of a plate;
- covering (108) the adhesive layer with a detachable protective film 7; and
- cutting up (106) the plates into pieces of desired size.

According to its third embodiment, the invention relates to an object 11 and 12 using autonomous firefighting agent 10 of the invention to put out fire within 10 to 20 seconds after ignition. In use, autonomous firefighting agent 10 is placed at a potentially fire-hazardous point and puts out the fire upon ignition at an early stage thereof. Fire is extinguished by halocarbon vapors released profusely when the agent is heated to a temperature above 110°C as the microcapsule shells are broken up. Fire is put out within 10 to 20 seconds after ignition, preventing the objects protected from being destroyed. The agent is effective in protecting electrical switchboards 11 (FIG. 4) and boxes (FIG. 3), vehicle engine bays, transformer and server stations, and other electrical switchgear and power units from fire.

The invention of this patent application produces a highly efficacious firefighting agent 10 that releases intensively a fire-extinguishing agent and is flexible, strong, durable, reliable, and easy to use.

## Claims

1. An autonomous firefighting agent (10) made from a material having fire-extinguishing properties comprising microcapsules (2) filled with a fire-extinguishing composition and having a size from 2 to 100 µm, said microcapsules being a halocarbon enclosed in a polymeric shell of polyurea and/or polyurethane, and a binder (3), wherein the binder (3) is a composite material comprising a polymeric component and mineral fibers (5) and/or particles.

2. An autonomous firefighting agent (10) of claim 1, wherein the halocarbon is enclosed in a polymeric shell of polyurea and/or polyurethane on the basis of polyisocyanate prepolymer.

3. An autonomous firefighting agent (10) of claim 1 or claim 2, wherein the halocarbon is selected from one of the following first substances: (a) 1,1,2,2-tetrafluorodibromoethane; (b) 1,1,2-trifluorotrichloroethane; and (c) 2-iodo-1,1,1,2,3,3,3-heptafluoropropane, and/or a mixture thereof with other halocarbons.

4. An autonomous firefighting agent (10) of claim 3, wherein other halocarbons in the mixture contain one of the following second substances: (a) 1,1,2,2-tetrafluoroethane; (b) 1,1-difluoro-2,2,2-trichloroethane; (c) 1,2-difluorotrichloroethane; (d) 1,1-difluoro-1,2-dichloroethane; (e) 1,2-difluoro-1,1-dichloroethane; (f) 1,1-difluoro-1-chloroethane; (g) 1-fluoro-1,1-dichloroethane; (h) 1-fluoro-2-chloroethane; (i) pentafluorochloroethane; (j) 1,1,2,2-tetrafluorodichloroethane; (k) 1,1,1-trifluorotrichloroethane; (I) 1,1,2-trifluorotrichloroethane; (m) 1,1-difluorotetrachloroethane; and (n) 1,2-difluorotetrachloroethane.

5. An autonomous firefighting agent (10) of any one of claims 1 to 4, wherein the mineral fibers (5) contain at least one of the following materials: (a) glass fiber; (b) basalt fiber; (c) fiber of natural minerals; and (d) fiber of artificial minerals.

6. An autonomous firefighting agent (10) of any one of claims 1 to 5, wherein mineral particles contain at least one of the following materials: (a) calcite; (b) marble; (c) chalk; (d) natural minerals; and (e) artificial minerals.

7. An autonomous firefighting agent (10) of any one of claims 1 to 6, wherein the polymeric component comprises at least one of the following substances: (a) acrylic resin; (b) alkyd resin; (c) glyptal resin; (d) latex resin; (e) pentaphthalic resin; (f) epoxy resin; (g) polyurethane; (h) polyurea; (i) polyvinyl alcohol; and (j) polyvinyl acetate.

8. An autonomous firefighting agent (10) of any one of claims 1 to 7, that is shaped into a plate.

9. A method for manufacturing (100) an autonomous firefighting agent (10) of claim 8 combined with claim 2, comprising the steps of:
- preparing (101) a first mixture of a fire-extinguishing agent and polyisocyanate;
- obtaining (102) an emulsion of the first mixture in an aqueous solution of polyvinyl alcohol;
- adding (1020) the resulting emulsion to an aqueous solution of polyethylene polyamine;
- producing (103) a suspension of microcapsules in water;
- preparing (104) a second mixture of the suspension and a binder;
- shaping (1040) the second mixture into plates;
- drying (105) the plates;
- applying (107) an adhesive layer (6) to one side of a plate;
- covering (108) the adhesive layer with a detachable protective film (7); and
- cutting up (106) the plates into pieces of desired size.

10. An object (11), (12) using the autonomous firefighting agent (10) of any one of claims 1 to 8 to put out fire.

## Patentansprüche

1. Autonomes Brandbekämpfungsmittel (10), hergestellt aus einem Material mit feuerlöschenden Eigenschaften, umfassend: Mikrokapseln (2), gefüllt mit einer Feuerlöschzusammensetzung und eine Größe von 2 bis 100 µm aufweisend, wobei die Mikrokapseln ein in einer Polymerhülle aus Polyharnstoff und/oder Polyurethan eingeschlossener Halogenkohlenwasserstoff sind, und ein Bindemittel (3), wobei das Bindemittel (3) ein Verbundmaterial ist, das eine Polymerkomponente und Mineralfasern (5) und/oder Mineralpartikel umfasst.

2. Autonomes Brandbekämpfungsmittel (10) nach Anspruch 1, wobei der Halogenkohlenwasserstoff in einer Polymerhülle aus Polyharnstoff und/oder Polyurethan auf Basis eines Polyisocyanat-Präpolymers eingeschlossen ist.

3. Autonomes Brandbekämpfungsmittel (10) nach Anspruch 1 oder Anspruch 2, wobei der Halogenkohlenwasserstoff ausgewählt ist aus einem der folgenden ersten Stoffe: (a) 1,1,2,2-Tetrafluordibromethan; (b) 1,1,2-Trifluortrichlorethan und (c) 2-Iod-1,1,1,2,3,3,3-heptafluorpropan, und/oder einem Gemisch davon mit anderen Halogenkohlenwasserstoffen.

4. Autonomes Brandbekämpfungsmittel (10) nach Anspruch 3, wobei andere Halogenkohlenwasserstoffe in dem Gemisch einen der folgenden zweiten Stoffe umfassen: (a) 1,1,2,2-Tetrafluorethan; (b) 1,1-Difluor-2,2,2-trichlorethan; (c) 1,2-Difluortrichlorethan; (d) 1,1-Difluor-1,2-dichlorethan; (e) 1,2-Difluor-1,1-dichlorethan; (f) 1,1-Difluor-1-chlorethan; (g) 1-Fluor-1,1-dichlorethan; (h) 1-Fluor-2-chlorethan; (i) Pentafluorchlorethan; (j) 1,1,2,2-Tetrafluordichlorethan; (k) 1,1,1-Trifluortrichlorethan; (l) 1,1,2-Trifluortrichlorethan; (m) 1,1-Difluortetrachlorethan und (n) 1,2-Difluortetrachlorethan.

5. Autonomes Brandbekämpfungsmittel (10) nach einem der Ansprüche 1 bis 4, wobei die Mineralfasern (5) mindestens eines der folgenden Materialien umfassen: (a) Glasfaser; (b) Basaltfaser; (c) Faser aus natürlichen Mineralien und (d) Faser aus synthetischen Mineralien.

6. Autonomes Brandbekämpfungsmittel (10) nach einem der Ansprüche 1 bis 5, wobei die Mineralpartikel mindestens eines der folgenden Materialien umfassen: (a) Kalkspat; (b) Marmor; (c) Kreide; (d) natürliche Mineralien und (e) synthetische Mineralien.

7. Autonomes Brandbekämpfungsmittel (10) nach einem der Ansprüche 1 bis 6, wobei die Polymerkomponente mindestens einen der folgenden Stoffe umfasst: (a) Acrylharz; (b) Alkydharz; (c) Glyptalharz; (d) Latexharz; (e) Pentaphthalsäureharz; (f) Epoxidharz; (g) Polyurethan; (h) Polyharnstoff; (i) Polyvinylalkohol und (j) Polyvinylacetat.

8. Autonomes Brandbekämpfungsmittel (10) nach einem der Ansprüche 1 bis 7, das zu einer Platte ausgebildet ist.

9. Verfahren zur Herstellung (100) eines autonomen Brandbekämpfungsmittels (10) nach Anspruch 8 in Verbindung mit Anspruch 2, umfassend die folgenden Schritte:
- Herstellen (101) eines ersten Gemisches aus einem Feuerlöschmittel und einem Polyisocyanat;
- Erhalten (102) einer Emulsion des ersten Gemisches in einer wässrigen Lösung von Polyvinylalkohol;
- Zugeben (1020) der resultierenden Emulsion zu einer wässrigen Lösung von Polyethylenpolyamin;
- Herstellen (103) einer Suspension von Mikrokapseln in Wasser;
- Herstellen (104) eines zweiten Gemisches aus der Suspension und einem Bindemittel;
- Ausbilden (1040) des zweiten Gemisches zu Platten;
- Trocknen (105) der Platten;
- Aufbringen (107) einer Klebstoffschicht (6) auf einer Seite einer Platte;
- Überziehen (108) der Klebstoffschicht mit einer ablösbaren Schutzschicht (7); und
- Zerteilen (106) der Platten in Stücke der gewünschten Größe.

10. Gegenstand (11), (12) unter Verwendung des autonomen Brandbekämpfungsmittels (10) nach einem der Ansprüche 1 bis 8 zum Löschen von Feuer.

## Revendications

1. Agent autonome de lutte contre le feu (10) formé d'un matériau présentant des propriétés d'extinction, comprenant des microcapsules (2) chargées d'une composition extinctrice et ayant une grandeur comprise entre 2 et 100 µm, lesdites microcapsules étant constituées d'un halocarbone inclus dans une enveloppe polymère en polyurée et/ou en polyuréthane, et d'un liant (3), le liant (3) étant un matériau composite comprenant un composant polymère et des fibres minérales (5) et/ou des particules.

2. Agent autonome de lutte contre le feu (10) selon la revendication 1, où le halocarbone est inclus dans une enveloppe polymère en polyurée et/ou en polyuréthane à base de prépolymère de polyisocyanate.

3. Agent autonome de lutte contre le feu (10) selon la revendication 1 ou la revendication 2, où le halocarbone est sélectionné parmi une des premières substances suivantes : (a) 1,1,2,2 tétrafluorodibromoéthane ; (b) 1,1,2-trifluorotrichloroéthane ; et (c) 2-iodo-1,1,1,2,3,3,3-heptafluoropropane, et/ou un mélange de ceux-ci avec d'autres halocarbones.

4. Agent autonome de lutte contre le feu (10) selon la revendication 3, où d'autres halocarbones du mélange contiennent une ou plusieurs des deuxièmes substances suivantes : (a) 1,1,2,2 tétrafluoroéthane ; (b) 1,1-difluoro-2,2,2-trichloroéthane, (c) 1,2-difluorotrichloroéthane ; (d) 1, 1-difluoro-1,2-dichloroéthane ; (e) 1,2-difluoro-1,1-dichloroéthane ; (f) 1,1-difluoro-1-chloroéthane ; (g) 1-fluoro-1,1-dichloroéthane ; (h) 1-fluoro-2-chloroéthane ; (i) pentafluorochloroéthane ; (j) 1,1,2,2-tétrafluorodichloroéthane ; (k) 1,1,1-trifluorotrichloroéthane ; (I) 1,1,2-trifluorotrichloroéthane ; (m) 1,1-difluoro-tétrachloroéthane ; et (n) 1,2-difluorotétrachloroéthane.

5. Agent autonome de lutte contre le feu (10) selon l'une des revendications 1 à 4, où les fibres minérales (5) contiennent au moins un des matériaux suivants : (a) fibres de verre ; (b) fibres de basalte ; (c) fibres de minéraux naturels ; et (d) fibres de minéraux artificiels.

6. Agent autonome de lutte contre le feu (10) selon l'une des revendications 1 à 5, où les particules minérales contiennent au moins un des matériaux suivants : (a) calcite ; (b) marbre ; (c) craie ; (d) minéraux naturels ; et (e) minéraux artificiels.

7. Agent autonome de lutte contre le feu (10) selon l'une des revendications 1 à 6, où le composant polymère comprend au moins une des substances suivantes : (a) résine acrylique ; (b) résine alkyde ; (c) résine glyptal ; (d) résine latex ; (e) résine pentaphtalique ; (f) résine époxy ; (g) polyuréthane ; (h) polyurée, (i) alcool polyvinylique ; et (j) acétate de polyvinyle.

8. Agent autonome de lutte contre le feu (10) selon l'une des revendications 1 à 7, se présentant sous forme de plaque.

9. Procédé de fabrication (100) d'un agent autonome de lutte contre le feu (10) selon la revendication 8 associée à la revendication 2, comprenant les étapes suivantes :
- préparation (101) d'un premier mélange d'un agent extincteur et de polyisocyanate ;
- obtention (102) d'une émulsion du premier mélange dans une solution aqueuse d'alcool polyvinylique ;
- ajout (1020) de l'émulsion résultante à une solution aqueuse de polyéthylène-polyamine ;
- production (103) d'une suspension de microcapsules dans l'eau ;
- préparation (104) d'un deuxième mélange de la suspension et d'un liant ;
- formage (1040) en plaques du deuxième mélange ;
- séchage (105) des plaques ;
- application (107) d'une couche adhésive (6) sur une face d'une plaque ;
- revêtement (108) de la couche adhésive par un film protecteur détachable (7) ; et
- découpe (106) des plaques en pièces de dimensions souhaitées.

10. Objet (11), (12) recourant à l'agent autonome de lutte contre le feu (10) selon l'une des revendications 1 à 8 pour l'extinction d'un feu.
